# EUROPEAN PATENT APPLICATION

(11) **EP 4 286 078 A1**
(43) Date of publication of application: **06.12.2023**
(21) Application number: 23172819.7
(22) Date of filing: 11.05.2023
(51) Int. Cl.: B22F 10/28, B22F 10/31, B22F 12/45, B22F 12/90, B33Y 10/00, B33Y 50/02

(54) **APPARATUSES, SYSTEMS, AND METHODS FOR IN-SITU FIELD ALIGNMENT DETECTION FOR ADDITIVE MANUFACTURING**

(30) Priority: 01.06.2022 US 202217830014
(71) Applicant: General Electric Company, Schenectady, NY 12345 (US)
(72) Inventor: MCCARTHY, Brian S., Schenectady, New York, 12345 (US); SHI, Xiaolei, Schenectady, New York, 12345 (US); VASIL, Christina, Schenectady, New York, 12345 (US); CAYNOSKI, William Colton, Schenectady, New York, 12345 (US); GAMBONE, Justin John, Schenectady, New York, 12345 (US); DUCLOS, Steven J., Schenectady, New York, 12345 (US)
(74) Representative: Hafner & Kohl PartmbB

(57) **Abstract**

An apparatus (300) may include a processor (305), memory modules (340), and machine-readable instructions stored in the memory modules. When executed by the processor, the instructions may cause the apparatus to receive image data of one or more laser strikes on a build plane while a part is being built, the image data indicating positions of a first set of fiducial strikes made by a first laser (120) on the build plane and positions of a second set of fiducial strikes made by a second laser (121) on the build plane, determine relative positions of the first set of fiducial strikes and the second set of fiducial strikes from the received image data, compare the determined relative positions of the first and second sets of fiducial strikes to expected relative positions, and determine whether the first laser and the second laser are misaligned with respect to each other based on the comparison.

## Description

### FIELD

The present disclosure relates to additive manufacturing, and more specifically, to in-situ field alignment detection for additive manufacturing.

### BACKGROUND

Direct metal laser melting (DMI,M) is an additive manufacturing process that uses lasers to melt ultra-thin layers of metal powder to build a three-dimensional object or part. During operation of a DMLM machine including a plurality of lasers, one or more of the lasers may become misaligned with respect to one or more of the other lasers. If this happens, a seam or other material defect may be introduced into the part being built.

### BRIEF DESCRIPTION OF THE DRAWINGS

FIG. 1 schematically depicts an example additive manufacturing machine for building a part by additive manufacturing, according to one or more embodiments shown and described herein;
FIG. 2 schematically depicts a system for performing in-situ field alignment for additive manufacturing, according to one or more embodiments shown and described herein;
FIG. 3 schematically depicts an alignment apparatus, according to one or more embodiments shown and described herein;
FIG. 4 depicts an example cross section of a layer of a part that may be built by the additive manufacturing machine of FIG. 1, according to one or more embodiments shown and described herein;
FIG. 5 depicts another example cross section of a layer of a part that may be built by the additive manufacturing machine of FIG. 1, according to one or more embodiments shown and described herein;
FIG. 6 depicts an image that may be used by the system of FIG. 2 to perform in-situ field alignment, according to one or more embodiments shown and described herein; and
FIG. 7 depicts a flow diagram of an illustrative method for performing in-situ field alignment for additive manufacturing, according to one or more embodiments shown and described herein.

### DETAILED DESCRIPTION

The present disclosure generally relates to in-situ field alignment for additive manufacturing. In the illustrated example, the present disclosure relates to direct metal laser melting (DMLM). However, in other examples, the present disclosure may be utilized with other types of additive manufacturing

Direct metal laser melting (DMI,M) is an additive manufacturing process that uses lasers to melt ultra-thin layers of metal powder to build a three-dimensional object or part. During operation of a DMLM machine including a plurality of lasers, one or more of the lasers may become misaligned with respect to one or more of the other lasers. If this happens, a seam or other material defect may be introduced into the part being built

Computer-aided design (CAD) software may be used to design a three-dimensional part. An output file generated by the CAD software may then be converted into a plurality of slice files representing different layers of the part. The slice files are then loaded onto a DMLM machine for building the part.

During operation, a recoater moves across a build platform and evenly spreads a thin layer of fine metal powder. A laser then melts the powder to form a cross-section of the part for one layer based on a slice file. The build platform is then lowered and the process is repeated for the next layer of the part. In some examples, a DMLM machine may include a plurality of lasers. Each laser may operate over a different portion of the build platform. As such, a part to be built may be stitched together from multiple sections, with each laser being used to build a different section. This may allow for larger parts to be built than may be possible using a single laser and/or allow for a quicker formation of parts relative to a single laser process.

However, if the plurality of lasers of the DMI,M machine are misaligned with respect to each other, the part may not be properly stitched together. Accordingly, in embodiments disclosed herein, a camera may be positioned to capture images along a line of sight of one of the lasers. As such, the camera may capture images of laser strikes made by the laser on the build platform of the DMLM machine. If the camera is able to also capture an image of one or more laser strikes made by another laser of the DMLM machine within the same frame, the expected relative position between the laser strikes of the two lasers may be compared to the actual relative position between the laser strikes of the two lasers. If the relative position between the strikes from the two lasers is not as expected, it may be determined that the lasers are misaligned with respect to each other, and corrective action may be taken to properly align the lasers.

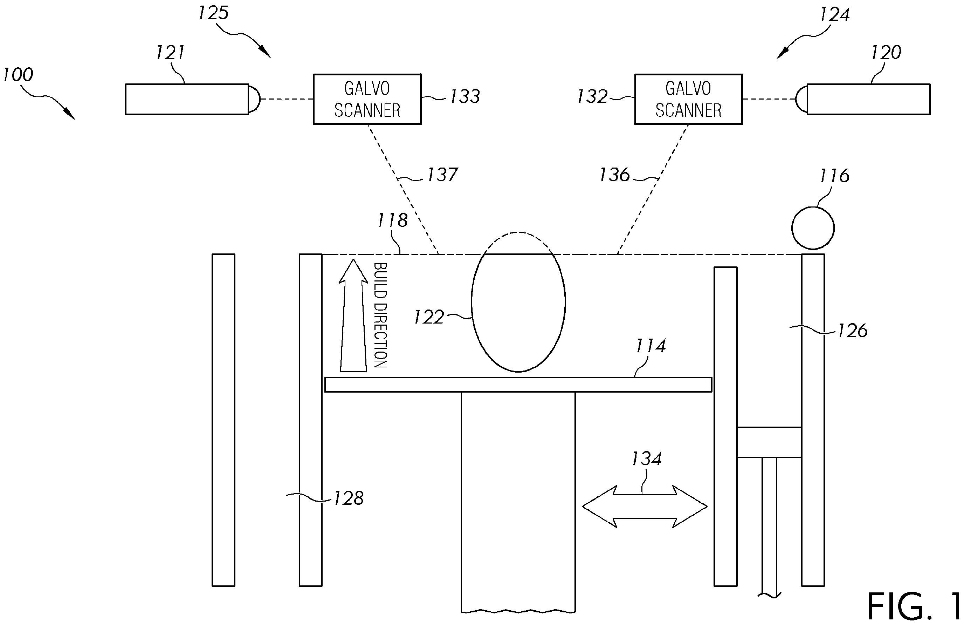

FIG. 1 shows a schematic diagram of an illustrative apparatus for performing DMLM additive manufacturing. As used herein, the apparatus may be referred to as a DMLM machine 100. The DMLM machine 100 builds objects, such as, for example, a part 122, in a layer-by-layer manner by sintering or melting a powder material using energy beams 136 and 137 generated by one or more sources such as, for example, laser 120 and 121. As explained above, a plurality of lasers may be used to build different sections of the part 122. In the example of FIG. 1, the DMLM machine 100 includes two lasers 120, 121. However, it should be understood that in other examples, the DMI,M machine 100 may include more than two lasers. In addition, while the present disclosure relates primarily to in-situ field alignment for additive manufacturing using the DMLM machine 100, the various methods and processes described herein may also be implemented with another type of apparatus for additive manufacturing instead of the DMI,M machine 100.

The powder to be melted by the energy beam is supplied by a reservoir 126 and is spread evenly over a build plate 114 using a recoater 116 (e.g., a recoater arm) traveling in a direction 134 to maintain the powder at a level 118 and/or remove excess powder material extending above the powder level 118 to waste container 128. The energy beams 136, 137 sinter or melt a cross sectional layer of the object being built under control of galvo scanners 132 and 133. The build plate 114 is then lowered and another layer of powder is spread over the part 122 being built, followed by successive melting/sintering of the powder by the lasers 120, 121. The process is repeated until the part 122 is completely built from the melted/sintered powder material.

As each layer of the part 122 is being built by the DMLM machine 100, the top most layer of the part being built at any given time is referred to herein as a build plane. As such, as each successive layer of the part 122 is being built, a layer of powder is spread over the current build plane of the part 122.

The lasers 120, 121 may be controlled by a computer system including a processor and a memory. The computer system may determine a scan pattern for each layer and may control the lasers 120, 121 and the galvo scanners 132, 133 to irradiate the powder material according to the scan pattern. Each of the lasers 120, 121 may operate on a different portion of the build plate 114 and may be used to build different sections of the part 122. In embodiments, the laser 120 and the galvo scanner 132 may comprise a first laser channel 124, while the laser 121 and the galvo scanner 133 may comprise a second laser channel 125. The laser channels 124, 125 may also include mirrors, lenses, or other optical equipment to control the energy beams 136, 137.

After fabrication of the part 122 is complete, various post-processing procedures may be applied to the part 122. Post processing procedures may include removal of excess powder by, for example, blowing or vacuuming. Other post processing procedures may include a stress release process. Additionally, thermal and chemical post processing procedures may be used to finish the part 122.

In order for the part 122 to be built in multiple sections using the lasers 120, 121, the laser channels are desirably calibrated with respect to each other. That is, the laser strikes from the lasers 120, 121 desirably occur at expected locations on the build plane of the part 122 such that the section of the part 122 built from the laser 120 and the section of the part 122 built from the laser 121 are properly aligned. If the calibration or alignment between the laser channels 124, 125 becomes disturbed, the sections of the part 122 built by the lasers 120 and 121 may not be properly aligned and materially defects may occur in the part 122.

Accordingly, embodiments disclosed herein provide for in-situ field alignment of the DMLM machine 100. In particular, embodiments disclosed herein provide for alignment of the laser channels 124, 125 of the DMLM machine 100. However, in other examples, embodiments disclosed herein may provide for the alignment of a DMLM machine having more than two laser channels.

In embodiments disclosed herein, a camera may monitor the positions of the laser strikes made by the lasers 120, 121. By monitoring the positions of the laser strikes of the lasers 120, 121, the alignment of the laser channels 124, 125 with respect to each other may be determined, as disclosed herein. If the laser channels 124, 125 become misaligned, they may be adjusted to ensure proper alignment. In the example of FIG. 1, a camera may be positioned to capture images along a line of sight of one of the lasers 120, 121, as disclosed herein.

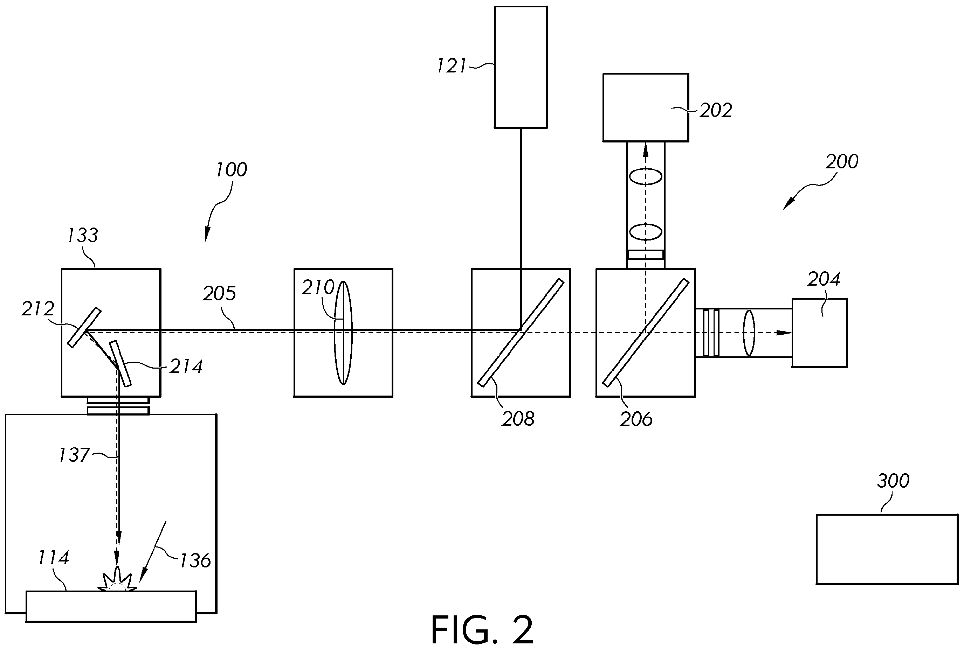

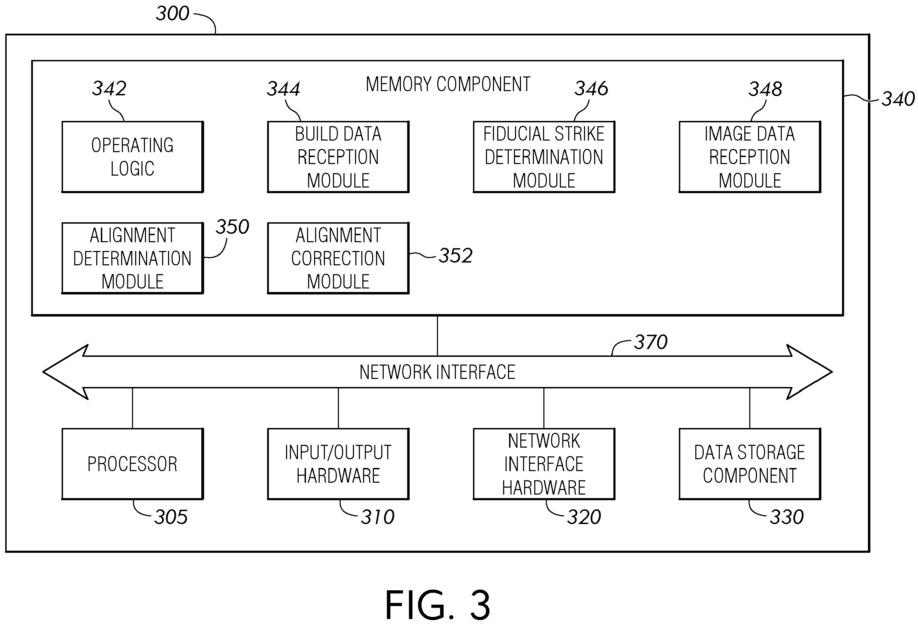

FIG. 2 shows a schematic diagram of a system 200 for performing in-situ field alignment of for DMI,M additive manufacturing, as disclosed herein. In the example of FIG. 2, the system 200 includes the DMI,M machine 100 of FIG. 1 and an alignment apparatus 300, which is discussed in further detail below with respect to FIG. 3. The system 200 further includes a camera 202, a photo diode 204, and a beam splitter 206. The camera 202 and the photo diode 204 may each contain multiple lens and other optical components. Furthermore, as shown in FIG. 2, the DMLM machine 100 also includes a laser deflection mirror 208, a focusing lens 210, and reflecting mirrors 212 and 214 within the galvo scanner 133.

In the example of FIG. 2, the laser 121 is positioned such that the energy beam 137 emitted by the laser 121 is deflected by the laser deflection mirror 208 through the focusing lens 210, which is then directed towards the DMLM machine 100. The energy beam 136 may also be emitted by the laser 120, as shown in FIG. 1. As such, the part 122, in the example of FIG. 1, may be built using the lasers 120, 121, as discussed above.

Also in the example of FIG. 2, the camera 202 is positioned to capture images along the optical line of sight 205 of the laser 121. In particular, the energy beam 137 emitted by the laser 121 may cause light to reflect and/or scatter off of the build plane of the part 122 and be directed by the galvo scanner 133 through the focusing lens 210 towards the laser deflection mirror 208. The light may then pass through laser deflection mirror 208 and be split by the beam splitter 206 such that a portion of the light travels to the camera 202 and a portion of the light travels to the photo diode 204. The camera 202 may then capture an image of the build plane of the part 122 along the line of sight 205 of the laser 121. In some examples, one of the camera 202 or the photo diode 204 may not be included in the system 200. In some examples, the system 200 may include other arrangements of the camera 202, the photo diode 204, and/or the laser 121 such that the camera 202 is able to capture images along the line of sight 205 of the laser 121.

By capturing a sequence of images of reflected and/or scattered laser strikes from the build plane along the field of view of the laser 121, the system 200 may determine the position where the energy beam 137 emitted by the laser 121 strikes the build plane. This position may be compared to a position where the energy beam 137 was expected to strike the build plane. Furthermore, if a sequence of images along the field of view of the laser 121 also includes a laser strike of the energy beam 136 emitted by the laser 120, the system 200 may compare the position where the energy beam 136 strikes the build plane compared to where it was expected to strike. As such, the relative position between the locations where the energy beams 136 and 137 strike the build plane may be compared to the relative position between the locations where the energy beams 136 and 137 were expected to strike the build plane. If the relative strike positions of the energy beams 136, 137 are within a threshold tolerance of the expected relative strike positions, the system 200 may determine that the laser channels 124, 125 are properly aligned with respect to each other. However, if the relative strike positions of the energy beams 136, 137 are outside of the threshold tolerance of the expected relative strike positions, the system 200 may determine that the laser channels 124, 125 are misaligned with respect to each other.

Referring to FIG. 3, the alignment apparatus 300 may receive images captured by the camera 202 and may determine whether the laser channels 124, 125 are misaligned with respect to each other, as disclosed herein. The components of the alignment apparatus 300 are schematically depicted. In some examples, the alignment apparatus 300 may be part of a DMLM machine, such as the DMLM machine 100 of FIG. 1. In other examples, the alignment apparatus 300 may be a stand-alone computing device or may be part of a computing device separate from the DMLM machine 100. In other examples, the alignment apparatus 300 may be within a system that includes the DMLM machine 100, such as the system 200 of FIG. 2.

As illustrated in FIG. 3, the alignment apparatus 300 may include a processor 305, input/output hardware 310, network interface hardware 320, a data storage component 330, and a non-transitory memory component 340. The memory component 340 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 340 may be configured to store operating logic 342, a build data reception module 344, a fiducial strike determination module 346, an image data reception module 348, an alignment determination module 350, and an alignment correction module 352 (each of which may be embodied as a computer program, firmware, or hardware, as an example). A network interface 370 is also included in FIG. 3 and may be implemented as a bus or other interface to facilitate communication among the components of the alignment apparatus 300.

The processor 305 may include any processing component configured to receive and execute instructions (such as from the data storage component 330 and/or the memory component 340). The input/output hardware 310 may include a monitor, keyboard, mouse, printer, camera, microphone, speaker, touch-screen, and/or other device for receiving input and outputting information. The network interface hardware 320 may include any wired or wireless networking hardware, such as a modem, LAN port, wireless fidelity (Wi-Fi) card, WiMax card, mobile communications hardware, and/or other hardware for communicating with other networks and/or devices, such as the DMI,M machine 100 of FIG. 1.

Referring still to FIG. 3, the data storage component 330 may store data received by the build data reception module 344 and/or the image data reception module 348. The data storage component 330 may also store other data utilized by the alignment apparatus 300, as described herein.

Included in the memory component 340 are the operating logic 342, the build data reception module 344, the fiducial strike determination module 346, the image data reception module 348, the alignment determination module 350, and the alignment correction module 352. The operating logic 342 may include an operating system and/or other software for managing components of the alignment apparatus 300.

The build data reception module 344 may receive build data associated with a part to be built by the DMLM machine 100 (e.g., the part 122 of FIG. 1). The data received by the build data reception module 344 may indicate the shape of the part to be built by the DMI,M machine 100. In some examples, the build data reception module 344 may receive data produced by CAD software. However, in other examples, the build data reception module 344 may receive build data from other types of software programs (e.g., slice files). In embodiments, the data received by the build data reception module 344 may indicate which portions of the part 122 are to be built by each of the lasers 120, 121.

The fiducial strike determination module 346 may determine fiducial strikes caused by the lasers 120, 121 during the build of the part 122. As used herein, a fiducial strike is a laser strike made by a DMLM machine that is used to determine a relative alignment between multiple lasers of the DMI,M machine. In particular, the fiducial strike determination module 346 may determine fiducial strikes that are to be used to determine whether the laser channels 124, 125 are in alignment with each other. As discussed above, the system 200 may determine whether the lasers 120, 121 are properly aligned with respect to each other. This may be accomplished by analyzing a series of images captured by the camera 202 that includes laser strikes made by both the laser 120 and the laser 121.

When images captured by the camera 202 includes positions of strikes made by both lasers 120, 121, the images may be analyzed to determine whether the relative positions between the strikes are as expected. Accordingly, the fiducial strike determination module 346 may determine fiducial strikes to be used to calibrate the alignment of the laser channels 124, 125. In some examples, the fiducial strikes may be made on the part 122 after a layer is complete before the next recoat. In other examples, the fiducial strikes may be made on powder after a recoat, before or after the next layer is built. In some examples, one or more fiducial parts may be built across the build plane of the part 122 and the fiducial strikes may be made on the fiducial parts. In some examples, multiple fiducial strikes may be made at a plurality of locations across the build plane and images showing the multiple fiducial strikes may be analyzed to determine the alignment of the laser channels 124, 125.

In some examples, the system 200 may determine an alignment of the laser channels 124, 125 at multiple layers of the part 122 while the part 122 is being built. In some examples, the system 200 may determine an alignment of the laser channels 124, 125 at every layer of the part 122 being built. In other examples, the system 200 may determine an alignment of the laser channels 124, 125 at a subset of the layers of the part 122. For example, the system may determine an alignment of the laser channels 124, 125 every n layers (e.g., every 2 layers, every 5 layers, every 10 layers, or the like). As such, the alignment of the laser channels 124, 125 may be continually checked while the part is being built. In these examples, the fiducial strike determination module 346 may determine fiducial strikes at each layer of the part 122 at which the alignment of the laser channels 124, 125 is to be checked. The layers of the build of the part 122 at which the alignment of the laser channels 124, 125 is be determined may be specified by a user or may be specified in a configuration. In some examples, the system 200 may monitor the alignment of the laser channels 124, 125 at multiple layers of the part 122 to determine if the alignment is changing over time.

In a first mode of operation, the fiducial strike determination module 346 may determine fiducial strikes based on laser strikes included in the build data reception module 344. That is, the fiducial strike determination module 346 may calibrate the laser channels 124, 125 based on laser strikes that are to be used as part of the build of the part 122. In contrast, in a second mode of operation, the fiducial strike determination module 346 may determine additional laser strikes to add to the build data specifically to be used for calibration of the laser channels 124, 125. That is, the fiducial strike determination module 346 may add laser strikes that are not needed to build the part 122, but are used to determine alignment of the laser channels 124, 125.

In the first mode of operation, the fiducial strike determination module 346 may analyze the build data received by the build data reception module 344 to determine appropriate laser strikes to use as fiducials. In particular, the fiducial strike determination module 346 may select laser strikes from both of the lasers 120, 121 that are within the field of view of the camera 202 as fiducials, such that the relative position of the laser strikes can be compared against each other. In examples for which the alignment of the laser channels 124, 125 is to be calibrated at multiple layers, the fiducial strike determination module 346 may select laser strikes to be used as fiducials at each layer of the build of the part 122 at which the alignment of the laser channels 124, 125 is to be calibrated.

In the second mode of operation, the fiducial strike determination module 346 may determine fiducial strikes that are not used to build the part 122. In particular, in some examples, the fiducial strike determination module 346 may generate locations for each of the lasers 120, 121 to strike that may be used as fiducials. The fiducial strike determination module 346 may generate fiducial strikes for the lasers 120, 121 that are within the field of view of the camera 202 such that the alignment of the laser channels 124, 125 may be determined. In examples in which the alignment of the laser channels 124, 125 is to be determined at multiple layers, the fiducial strike determination module 346 may generate fiducial strikes at each layer of the part 122 for which alignment of the laser channels 124, 125 is to be determined. In the second mode of operation, after determining locations of fiducial strikes for the lasers 120, 121, the fiducial strike determination module 346 may add the fiducial strike locations into the build file and may cause the network interface hardware 320 to transmit the modified build file with the fiducial strike locations to the DMLM machine 100 such that the DMLM machine may cause the lasers 120, 121 to make the fiducial strikes. As such, after the DMI,M machine 100 causes the lasers 120, 121 to make the fiducial strikes, the alignment apparatus 300 may analyze the fiducial strikes to determine whether the laser channels 124, 125 are properly aligned, as disclosed herein.

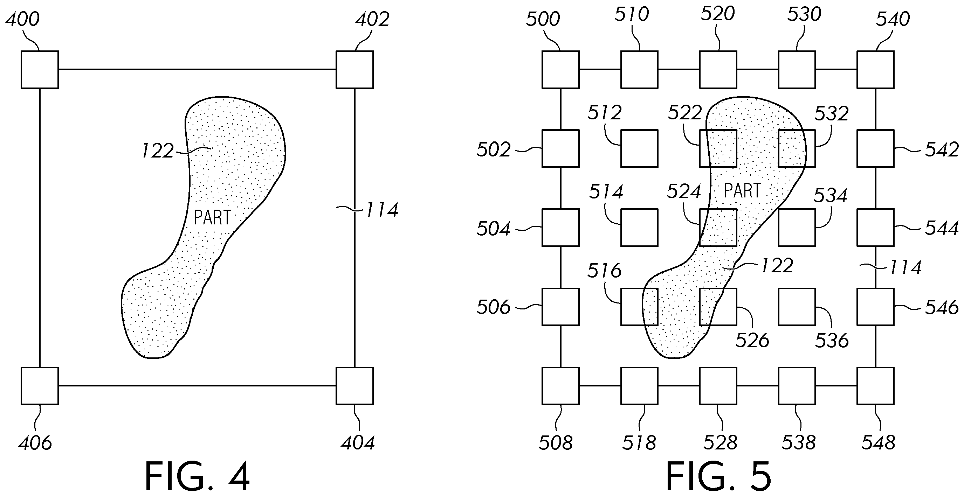

In some examples, in the second mode of operation, the fiducial strike determination module 346 may determine fiducial strike locations that are located on the part 122 being built. However, the fiducial strikes are typically small enough so as not to degrade the structure of the part 122. In some examples, the fiducial strikes may be located on a portion of the build plane that does not include the part 122. For example, FIG. 4 shows a layer of the part 122 having fiducial strike locations 400, 402, 404, 406 located at positions on the build plane that do not include the part. Accordingly, fiducial strikes can be made at locations 400, 402, 404, 406 without affecting the part 122 at all. In other examples, the fiducial strikes may be made at a lower layer of the part 122. When building a part using DMLM manufacturing, the first few layers of the build are typically discarded. Accordingly, fiducial strikes may be made on a layer of the part 122 to be discarded without affecting the structure of the part 122. For example, FIG. 5 shows an example layer of the part 122 that is to be discarded. In the example of FIG. 5, fiducial strikes may be made at locations 500, 502, 504, 506, 508, 510, 512, 514, 516, 518, 520, 522, 524, 526, 528, 530, 532, 534, 536, 538, 540, 542, 544, 546, and 548 on the build plane without affecting the part 122, since this layer will be discarded from the final build of the part 122.

In some examples, in either the first mode of operation or the second mode of operation, the laser 120 and the laser 121 may not be time synchronized with each other. That is, the lasers 120, 121 may each build their respective portions of the part 122 with a timing that is not related to the timing of the other laser. During a normal build of the part 122, this may not cause any problems since the two portions of the part may be built independently and then stitched together. However, this lack of time synchronization may make it difficult to determine alignment of the laser channels 124, 125 if the fiducial strikes from the two lasers 120, 121 do not occur at the same time. Accordingly, in some examples, the fiducial strike determination module 346 may determine multiple fiducial strikes for one or both of the lasers 120, 121. The camera 202 may then capture multiple images of each of the fiducial strikes and may stack the images together to determine the alignment of the laser channels 124, 125, as disclosed herein.

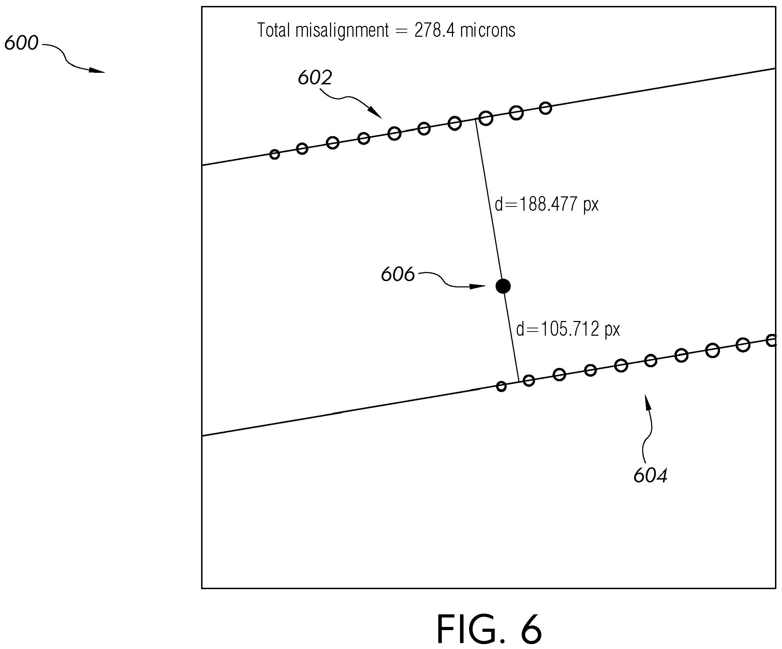

In one example, the multiple fiducial strikes may comprise parallel lines used for hashing or rasterizing. For example, FIG. 6 shows a stacked image 600 comprising a first parallel line comprising a plurality of laser strikes 602 from the laser 120 and a second parallel line comprising a plurality of laser strikes 604 from the laser 120. A laser strike 606 from the laser 121 may then be made halfway in between the parallel lines from the laser strikes 602 and 604. If the laser channels 124, 125 are properly aligned, the laser strike 606 will be positioned at the midpoint between the laser strikes 602 and 604 in the stacked image 500. However, if the laser channels 124, 125 are misaligned, the laser strike 606 may be offset from the midpoint between the laser strikes 602 and 604. In the example of FIG. 6, the laser strike 606 is positioned 106.477 pixels from the laser strikes 602 but 105.712 pixels from the laser strikes 604, which corresponds to a misalignment of 276.4 microns.

Referring back to FIG. 3, the image data reception module 348 may receive image data captured by the camera 202 and/or the photo diode 204 of the system 200 of FIG. 2. The image data received by the image data reception module 348 may comprise images of laser strikes from the lasers 120, 121. In particular, the image data sequence received by the image data reception module 348 may show fiducial strikes made by the lasers 120, 121, and a stacked image may be generated from the image sequence such as the stacked image 600 of FIG. 6. After the image data reception module 348 receives image data of fiducial strikes, the alignment determination module 350 may analyze one or more received images to determine alignment of the laser channels 124, 125, as disclosed below.

Referring still to FIG. 3, the alignment determination module 350 may analyze one or more images of fiducial strikes received by the image data reception module 348 to determine an alignment of the laser channels 124, 125, as disclosed herein. In particular, the alignment determination module 350 may compare the relative positions between the fiducial strikes made by the laser channels 124, 125 and the expected relative positions of the fiducial strikes as determined by the fiducial strike determination module 346. That is, the alignment determination module 350 may first determine the relative positions between fiducial strikes made by the laser channels 124 and 125. The alignment determination module 350 may then determine the expected relative positions between the fiducial strikes based on the output of the fiducial strike determination module 346. The alignment determination module 350 may then compare the actual relative positions to the expected relative positions.

In one example, the alignment determination module 350 may compare one or more distances between fiducial strikes made by the laser channels 124, 125 and the expected distances between the fiducial strikes, such as in the example of FIG. 6. For example, the alignment determination module 350 may compare the actual distance between the laser strikes 602 and the laser strike 606 to the expected distance between the laser strikes 602 and the laser strike 606. If the expected distances between the fiducial strikes made by the two lasers 120, 121 varies from the actual distances between the laser strikes, the alignment determination module 350 may determine that the laser channels 124, 125 are not properly aligned.

In one example, the alignment determination module 350 may analyze a received image to determine a distance in pixels between two fiducial strikes made by the laser 120. This distance in pixels between the two fiducial strikes can be compared against a known nominal distance between the two fiducial strikes (e.g., based on the build data for the part 122) to determine a ratio of pixels per micron (or some other unit distance) for the received image. The alignment determination module 350 may further analyze the received image to determine a difference in pixels between the expected location and the actual location of a fiducial strike made by the laser 121 with respect to the fiducial strikes made by the laser 120. The alignment determination module 350 may then use the determine ratio of pixels per micron for the received image to determine a value of the relative error in alignment between the laser channels 124, 125.

In some examples, the alignment determination module 350 may determine an alignment between the laser channels 124, 125 for a single layer of the build of the part 122 at one or more locations across the build plane. In other examples, the alignment determination module 350 may determine an alignment between the laser channels 124, 125 for multiple layers of the build of the part 122 at one or more locations across the build plane. In some examples, the alignment determination module 350 may determine whether any change occurs in the alignment of the laser channels 124, 125 across multiple layers of the build of the part 122.

Referring still to FIG. 3, the alignment correction module 352 may take certain action in response to a misalignment of the laser channels 124, 125 identified by the alignment determination module 350. In some examples, the alignment correction module 352 may output a warning to an operator of the system 200 indicating that the laser channels 124, 125 are misaligned. The warning may include the amount of relative error in alignment between the laser channels 124, 125 determined by the alignment determination module 350. In other examples, the alignment correction module 352 may take certain remedial action to correct the misalignment of the laser channels 124, 125, as described below.

In some examples, the alignment correction module 352 may perform a software correction to realign the laser channels 124, 125. For example, the alignment correction module 352 may cause the DMLM machine 100 to modify the position of future laser strikes of one of the lasers 120 or 121 based on the amount of misalignment determined by the alignment determination module 350. This may allow the DMLM machine 100 to adjust future laser strikes to compensate for the misalignment between the laser channels 124, 125.

In some examples, the alignment correction module 352 may adjust the build plate 114 up or down by an amount based on the relative misalignment of the laser channels 124, 125 determined by the alignment determination module 350. This may cause the lasers 120, 121 to be moved away from each other to compensate for the misalignment of the laser channels 124, 125.

In some examples, the alignment correction module 352 may take remedial action as whenever the alignment determination module 350 determines a misalignment between the laser channels 124, 125 in an amount greater than a predetermined threshold. In other examples, the alignment correction module 352 may only take remedial action to correct a misalignment between the laser channels 124, 125 when the alignment correction module 352 detects a misalignment over multiple layers. This may prevent unnecessary correction due to a measurement or other error that may cause an inaccurate misalignment determination to be made at a single layer of the part 122.

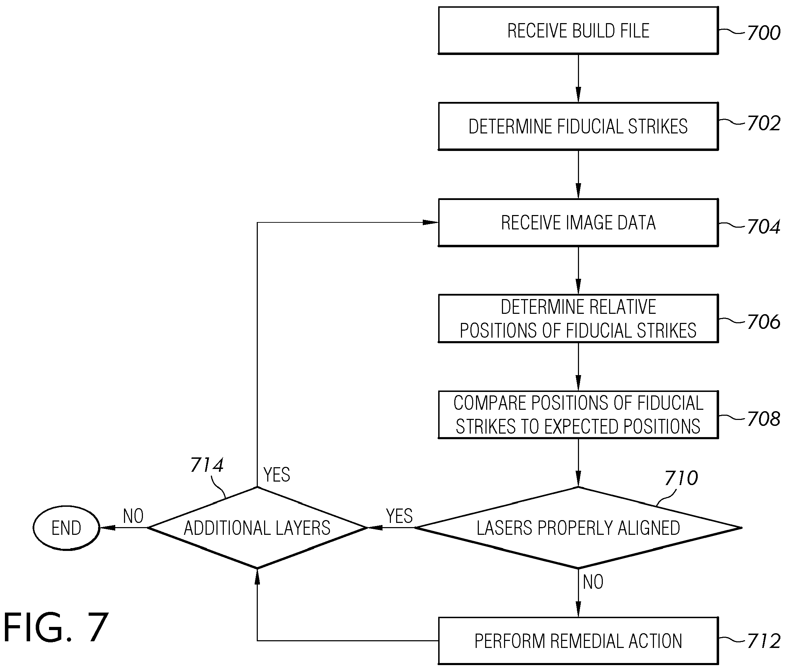

Referring now to FIG. 7, a flow chart is shown of an example method of operating the alignment apparatus 300 of FIGS. 2 and 3. At step 700, the build data reception module 344 receives a build file containing build data associated with the part 122. The build data may indicate laser strikes to be made by the lasers 120 and 121 of the DMLM machine 100.

At step 702, the fiducial strike determination module 346 determines fiducial strikes for the lasers 120, 121 based on the build data received by the build data reception module 344. In the first mode of operation, the fiducial strike determination module 346 may select laser strikes that are part of the build data as fiducial strikes. In the second mode of operation, the fiducial strike determination module 346 may modify the build file to add additional fiducial strikes to be made by the lasers 120 and 121. The fiducial strike determination module 346 may then transmit the modified build file back to the DMLM machine 100.

At step 704, the image data reception module 348 receives image data of the part while the part 122 is being built. The image data may be captured by the camera 202. The image data may comprise an image of reflected and/or scattered light from the build plane of the part 122 down-beam from the laser 121 such that the field of view of the image includes the laser strikes made by the laser 121. As such, the image data of the part may indicate positions of a first set fiducial strikes made by the laser 120 and positions of a second set of fiducial strikes made by the laser 121.

At step 706, the alignment determination module 350 determines relative positions of the fiducial strikes made by the laser 120 and the laser 121 based on the image received by the image data reception module 348. In some examples, the alignment determination module 350 may determine a pixel distance between fiducial strikes and may then determine a nominal distance between the fiducial strikes based on the pixel distance.

At step 708, the alignment determination module 350 compares the determined relative positions of the fiducial strikes made by the lasers 120 and 121 to the expected relative positions of the fiducial strikes made by the lasers 120 and 121. At step 710, the alignment determination module 350 determines whether the laser channels 124, 125 are properly aligned with respect to each other based on the comparison between the relative positions of the fiducial strikes and the expected positions of the fiducial strikes. If the alignment determination module 350 determines that the laser channels 124, 125 are properly aligned (YES at step 710), then control passes to step 714. If the alignment determination module 350 determines that the laser channels 124, 125 are not properly aligned (NO at step 710), then control passes to step 712.

At step 712, the alignment correction module 352 takes remedial action. In some examples, the alignment correction module 352 issues a warning to notify an operator of the DMLM machine 100 that the laser channels 124, 125 are misaligned. In other examples, the alignment correction module 352 may take remedial action to correct the misalignment of the laser channels 124, 125, as discussed above. Control then passes to step 714.

At step 714, the alignment apparatus 300 determines whether images of additional layers are to be received. If images of additional layers are to be received (YES at step 714), then control passes back to step 704 and the image data reception module 348 receives image data for the next layer for which alignment of the laser channels 124, 125 is to be checked. Alternatively, if no additional image data is to be received from additional layers (NO at step 714), then the method of FIG. 7 ends.

It should now be understood that devices, systems, and methods described herein provide in-situ field alignment for DMLM additive manufacturing using multiple lasers. In embodiments disclosed herein, build data associated with a part to be built by additive manufacturing may be received by an alignment apparatus, and the alignment apparatus may determine fiducial strikes based on the build data. In a first mode of operation, the fiducial strikes may be laser strikes caused by lasers of a DMLM machine as part of the build data. In a second mode of operation, the build file may be modified to include new laser strikes to be used as fiducial strikes.

During the build of the part, a camera with a field of view in line with one of the lasers may capture images of laser strikes being made on the build plane by more than one laser channel and the images may be transmitted to the alignment apparatus. The alignment apparatus may determine the positions of the fiducial strikes based on the images and may compare these positions to the expected positions of the fiducial strikes. Based on this comparison, the alignment apparatus may determine whether the laser channels are properly aligned with respect to each other. If the laser channels are not properly aligned, remedial action may be taken to notify an operator and/or correct the alignment.

In examples in which more than two laser channels are used to build the part 122, the techniques described above may still be used to determine an alignment of the laser channels. In these examples, the camera 202 may capture images showing laser strikes from lasers of each of the laser channels, so long as the laser strikes are all within the field of view of the camera 202. In some examples, other cameras may capture images showing laser strikes from one or more of the multiple laser channels that may be used to determine an alignment of the laser channels.

Further aspects of the disclosure are provided by the subject matter of the following clauses.

An apparatus comprising one or more processors; one or more memory modules; and machine-readable instructions stored in the one or more memory modules that, when executed by the one or more processors, cause the apparatus to receive image data of one or more laser strikes on a build plane, the image data indicating positions of a first set of fiducial strikes made by a first laser on the build plane and positions of a second set of fiducial strikes made by a second laser on the build plane; determine relative positions of the first set of fiducial strikes and the second set of fiducial strikes with respect to each other from the received image data; compare the determined relative positions of the first and second sets of fiducial strikes with respect to each other to expected relative positions of the first and second sets of fiducial strikes with respect to each other; and determine whether the first laser and the second laser are misaligned with respect to each other based on the comparison.

The apparatus of any preceding clause, wherein the image data comprises a plurality of images comprising the first set of fiducial strikes and the second set of fiducial strikes made at a plurality of time steps.

The apparatus of any preceding clause, wherein the first set of fiducial strikes comprises two parallel lines and the second set of fiducial strikes comprises one or more fiducial strikes between the two parallel lines.

The apparatus of any preceding clause, wherein the instructions further cause the apparatus to receive a build file associated with the part indicating a first plurality of laser strikes to be made by the first laser and a second plurality of laser strikes to be made by the second laser; and determine the first set of fiducial strikes from among the first plurality of laser strikes and determine the second set of fiducial strikes from among the second plurality of laser strikes based on the build file.

The apparatus of any preceding clause, wherein the instructions further cause the apparatus to determine fiducial strikes at multiple layers of the part.

The apparatus of any preceding clause, wherein the first set of fiducial strikes and the second set of fiducial strikes are within a field of view of a camera having a line of sight along a propagation direction of the first laser or the second laser.

The apparatus of any preceding clause, wherein the camera has a line of sight along a propagation direction of the first laser or the second laser.

The apparatus of any preceding clause, wherein the instructions further cause the apparatus to determine laser strikes that are not included in the build file as the first set of fiducial strikes and the second set of fiducial strikes; and modify the build file to include the first set of fiducial strikes and the second set of fiducial strikes.

The apparatus of any preceding clause, wherein the instructions further cause the apparatus to determine locations of the first set of fiducial strikes and the second set of fiducial strikes on a layer of the build file that will not be included in a final version of the part.

The apparatus of any preceding clause, wherein the instructions further cause the apparatus to determine locations of the first set of fiducial strikes and the second set of fiducial strikes at a location outside of the part.

The apparatus of any preceding clause, wherein the instructions further cause the apparatus to output a warning upon determination that the first laser and the second laser are misaligned with respect to each other.

The apparatus of any preceding clause, wherein the instructions further cause the apparatus to take remedial action to correct an alignment of the first laser of the second laser upon determination that the first laser and the second laser are misaligned with respect to each other.

The apparatus of any preceding clause, wherein the instructions further cause the apparatus to receive second image data of the build plane while a part is being built on the build plane, the second image data being captured at a second location on the build plane, the second location is different than a location where the image data was captured, the second image data indicating positions of a third set of fiducial strikes made by the first laser on the build plane and positions of a fourth set of fiducial strikes made by the second laser on the build plane; determine relative positions of the third set of fiducial strikes and the fourth set of fiducial strikes from the received second image data; compare the determined relative positions of the third and fourth sets of fiducial strikes to expected relative positions; and determine whether the first laser and the second laser are misaligned with respect to each other at the second location based on the comparison.

A method, comprising receiving image data of one or more laser strikes on a build plane, the image data indicating positions of a first set of fiducial strikes made by a first laser on the build plane and positions of a second set of fiducial strikes made by a second laser on the build plane; determining relative positions of the first set of fiducial strikes and the second set of fiducial strikes with respect to each other from the received image data; comparing the determined relative positions of the first and second sets of fiducial strikes with respect to each other to expected relative positions of the first and second sets of fiducial strikes with respect to each other; and determining whether the first laser and the second laser are misaligned with respect to each other based on the comparing.

The method of any preceding clause, wherein the image data comprises a plurality of images comprising the first set of fiducial strikes and the second set of fiducial strikes made at a plurality of time steps.

The method of any preceding clause, wherein the first set of fiducial strikes comprises two parallel lines and the second set of fiducial strikes comprises one or more fiducial strikes between the two parallel lines.

The method of any preceding clause, further comprising receiving a build file associated with the part indicating a first plurality of laser strikes to be made by the first laser and a second plurality of laser strikes to be made by the second laser; and determining the first set of fiducial strikes from among the first plurality of laser strikes and determining the second set of fiducial strikes from among the second plurality of laser strikes based on the build file.

The method of any preceding clause, further comprising determining fiducial strikes at multiple layers of the part.

The method of any preceding clause, wherein the first set of fiducial strikes and the second set of fiducial strikes are within a field of view of a camera associated with an additive manufacturing apparatus.

The method of any preceding clause, wherein the camera has a line of sight along a propagation direction of the first laser or the second laser.

The method of any preceding clause, further comprising determining laser strikes that are not included in the build file as the first set of fiducial strikes and the second set of fiducial strikes; and modifying the build file to include the first set of fiducial strikes and the second set of fiducial strikes.

The method of any preceding clause, further comprising determining locations of the first set of fiducial strikes and the second set of fiducial strikes on a layer of the build file that will not be included in a final version of the part.

The method of any preceding clause, further comprising determining locations of the first set of fiducial strikes and the second set of fiducial strikes at a location outside of the part.

The method of any preceding clause, further comprising outputting a warning upon determination that the first laser and the second laser are misaligned with respect to each other.

The method of any preceding clause, further comprising taking remedial action to correct an alignment of the first laser or the second laser upon determination that the first laser and the second laser are misaligned with respect to each other.

The method of any preceding clause, further comprising receiving second image data of the build plane while a part is being built on the build plane, the second image data being captured at a second location on the build plane, the second location is different than a location where the image data was captured, the second image data indicating positions of a third set of fiducial strikes made by the first laser on the build plane and positions of a fourth set of fiducial strikes made by the second laser on the build plane; determining relative positions of the third set of fiducial strikes and the fourth set of fiducial strikes from the received second image data; comparing the determined relative positions of the third and fourth sets of fiducial strikes to expected relative positions; and determining whether the first laser and the second laser are misaligned with respect to each other at the second location based on the comparing.

A system comprising an apparatus for building a part by additive manufacturing using at least a first laser and a second laser, the apparatus comprising a build plane on which the part is built; a camera having a line of sight along a propagation direction of the first laser or the second laser; and an alignment apparatus configured to receive image data of one or more laser strikes on the build plane, the image data is captured by the camera indicating positions of a first set of fiducial strikes made by the first laser on the build plane and positions of a second set of fiducial strikes made by the second laser on the build plane; determine relative positions of the first set of fiducial strikes and the second set of fiducial strikes with respect to each other based on the received image data; compare the determined relative positions of the first and second sets of fiducial strikes with respect to each other to expected relative positions of the first and second sets of fiducial strikes with respect to each othwer; and determine whether the first laser and the second laser are misaligned with respect to each other based on the comparison.

The system of any preceding clause, wherein the image data comprises a plurality of images comprising the first set of fiducial strikes and the second set of fiducial strikes made at a plurality of time steps.

The system of any preceding clause, wherein the first set of fiducial strikes comprises two parallel lines and the second set of fiducial strikes comprises one or more fiducial strikes between the two parallel lines.

The system of any preceding clause, wherein the alignment apparatus is further configured to receive a build file associated with the part indicating a first plurality of laser strikes to be made by the first laser and a second plurality of laser strikes to be made by the second laser; and determine the first set of fiducial strikes from among the first plurality of laser strikes and determine the second set of fiducial strikes from among the second plurality of laser strikes based on the build file.

The system of any preceding clause, wherein the alignment apparatus is further configured to determine fiducial strikes at multiple layers of the part.

The system of any preceding clause, wherein the first set of fiducial strikes and the second set of fiducial strikes are within a field of view of the camera.

The system of any preceding clause, wherein the alignment apparatus is further configured to determine laser strikes that are not included in the build file as the first set of fiducial strikes and the second set of fiducial strikes; and modify the build file to include the first set of fiducial strikes and the second set of fiducial strikes.

The system of any preceding clause, wherein the alignment apparatus is further configured to determine locations of the first set of fiducial strikes and the second set of fiducial strikes on a layer of the build file that will not be included in a final version of the part.

The system of any preceding clause, wherein the alignment apparatus is further configured to determine locations of the first set of fiducial strikes and the second set of fiducial strikes at a location outside of the part.

The system of any preceding clause, wherein the alignment apparatus is further configured to output a warning upon determination that the first laser and the second laser are misaligned with respect to each other.

The system of any preceding clause, wherein the alignment apparatus is further configured to take remedial action to correct an alignment of the first laser of the second laser upon determination that the first laser and the second laser are misaligned with respect to each other.

The system of any preceding clause, wherein the alignment apparatus is further configured to receive second image data of the build plane while a part is being built on the build plane, the second image data being captured at a second location on the build plane, the second location is different than a location where the image data was captured, the second image data indicating positions of a third set of fiducial strikes made by the first laser on the build plane and positions of a fourth set of fiducial strikes made by the second laser on the build plane; determine relative positions of the third set of fiducial strikes and the fourth set of fiducial strikes from the received second image data; compare the determined relative positions of the third and fourth sets of fiducial strikes to expected relative positions; and determine whether the first laser and the second laser are misaligned with respect to each other at the second location based on the comparison.

## Claims

1. An apparatus (300), comprising:
one or more processors (305);
one or more memory modules (340); and
machine-readable instructions stored in the one or more memory modules (340) that, when executed by the one or more processors (305), cause the apparatus (300) to:
receive image data of one or more laser strikes on a build plane while a part is being built on the build plane, the image data indicating positions of a first set of fiducial strikes made by a first laser (120) on the build plane and positions of a second set of fiducial strikes made by a second laser (121) on the build plane;
determine relative positions of the first set of fiducial strikes and the second set of fiducial strikes from the received image data;
compare the determined relative positions of the first and second sets of fiducial strikes to expected relative positions; and
determine whether the first laser and the second laser are misaligned with respect to each other based on the comparison.

2. The apparatus of claim 1, wherein the image data comprises a plurality of images comprising the first set of fiducial strikes and the second set of fiducial strikes made at a plurality of time steps.

3. The apparatus of any previous claim, wherein the instructions further cause the apparatus to:
receive a build file associated with the part indicating a first plurality of laser strikes to be made by the first laser and a second plurality of laser strikes to be made by the second laser; and
determine the first set of fiducial strikes from among the first plurality of laser strikes and determine the second set of fiducial strikes from among the second plurality of laser strikes based on the build file.

4. The apparatus of claim 3, wherein the first set of fiducial strikes and the second set of fiducial strikes are within a field of view of a camera having a line of sight along a propagation direction of the first laser (120) or the second laser (121).

5. The apparatus of any of claims 3-4, wherein the instructions further cause the apparatus to:
determine laser strikes that are not included in the build file as the first set of fiducial strikes and the second set of fiducial strikes; and
modify the build file to include the first set of fiducial strikes and the second set of fiducial strikes.

6. A method, comprising:
receiving (704) image data of one or more laser strikes on a build plane while a part is being built on the build plane, the image data indicating positions of a first set of fiducial strikes made by a first laser on the build plane and positions of a second set of fiducial strikes made by a second laser on the build plane;
determining (706) relative positions of the first set of fiducial strikes and the second set of fiducial strikes from the received image data;
comparing (708) the determined relative positions of the first and second sets of fiducial strikes to expected relative positions; and
determining (710) whether the first laser and the second laser are misaligned with respect to each other based on the comparing.

7. The method of claim 6, wherein the image data comprises a plurality of images comprising the first set of fiducial strikes and the second set of fiducial strikes made at a plurality of time steps.

8. The method of any of claims 6-7, wherein the first set of fiducial strikes comprises two parallel lines and the second set of fiducial strikes comprises one or more fiducial strikes between the two parallel lines.

9. The method of any of claims 6-8, further comprising:
receiving (700) a build file associated with the part indicating a first plurality of laser strikes to be made by the first laser and a second plurality of laser strikes to be made by the second laser; and
determining (702) the first set of fiducial strikes from among the first plurality of laser strikes and determining the second set of fiducial strikes from among the second plurality of laser strikes based on the build file.

10. The method of claim 9, wherein the first set of fiducial strikes and the second set of fiducial strikes are within a field of view of a camera associated with an additive manufacturing apparatus.

11. The method of any of claims 9-10, further comprising:
determining laser strikes that are not included in the build file as the first set of fiducial strikes and the second set of fiducial strikes; and
modifying the build file to include the first set of fiducial strikes and the second set of fiducial strikes.

12. The method of claim 11, further comprising determining locations of the first set of fiducial strikes and the second set of fiducial strikes on a layer of the build file that will not be included in a final version of the part.

13. The method of any of claims 6-12, further comprising outputting a warning upon determination that the first laser and the second laser are misaligned with respect to each other.

14. The method of any of claims 6-13, further comprising taking remedial action (712) to correct an alignment of the first laser or the second laser upon determination that the first laser and the second laser are misaligned with respect to each other.

15. The method of any of claims 6-14, further comprising:
receiving second image data of the build plane while a part is being built on the build plane, the second image data being captured at a second location on the build plane, the second location is different than a location where the image data was captured, the second image data indicating positions of a third set of fiducial strikes made by the first laser on the build plane and positions of a fourth set of fiducial strikes made by the second laser on the build plane;
determining relative positions of the third set of fiducial strikes and the fourth set of fiducial strikes from the received second image data;
comparing the determined relative positions of the third and fourth sets of fiducial strikes to expected relative positions; and
determining whether the first laser and the second laser are misaligned with respect to each other at the second location based on the comparing.
